# FASCICULE DE BREVET EUROPEEN

(11) **EP 3 812 847 B1**
(45) Date de publication et mention de la délivrance du brevet: **15.06.2022**
(21) Numéro de dépôt: 19204403.0
(22) Date de dépôt: 21.10.2019
(51) Int. Cl.: G04D 7/12

(54) **SYSTÈME DE MESURE POUR PLUSIEURS MOUVEMENTS HORLOGERS MÉCANIQUES**
MESSSYSTEM FÜR MEHRERE MECHANISCHE UHRWERKE
MEASURING SYSTEM FOR A PLURALITY OF MECHANICAL CLOCK MOVEMENTS

(43) Date de publication de la demande: 28.04.2021
(73) Titulaire: The Swatch Group Research and Development Ltd, 2074 Marin (CH)
(72) Inventeur: HUNDZINGER, Alexandre, 2000 Neuchâtel (CH); DE ROSA, Luca, 2013 Colombier (CH); SCORDILIS, Thierry, 2036 Cormondrèche (CH); MOSTEIRO VAZQUEZ, Yoann, 1587 Montmagny (CH); LEHMANN, José, 2022 Bevaix (CH); ZAMUNER, Giuseppe, 1022 Chavannes-Renens (CH)
(74) Mandataire: ICB SA

(56) Documents cités:
- EP-A1- 3 511 781
- US-A1- 2018 348 707

## Description

### DOMAINE TECHNIQUE DE L'INVENTION

La présente invention se rapporte aux montres mécaniques à remontage manuel ou automatique, et plus particulièrement à des systèmes pour tester le mouvement mécanique de ce type de montre.

### ETAT DE LA TECHNIQUE

Des tests sont bien connus pour déterminer la régularité de la marche ainsi que d'autres paramètres caractéristiques d'un mouvement de montre mécanique. Les mesures utilisées consistent en des mesures optiques et/ou acoustiques des impulsions générées par l'oscillateur mécanique du mouvement. Les mesures acoustiques connues à ce jour utilisent souvent des microphones coûteux qui rendent cette solution peu économique. De plus, il est difficile de mesurer plusieurs mouvements par une pluralité de microphones qui sont proches les uns des autres, à cause de la perturbation mutuelle des signaux acoustiques capturés par ces microphones. Or, les mesures optiques ont été développées, mais les appareillages pour mettre en œuvre ces méthodes sont assez complexes et également coûteux. US 2018/348707 concerne une boite pour tester une pluralité de montres mécaniques, ladite boîte ayant plusieurs compartiments, chaque compartiment étant configuré pour recevoir un mouvement de montre. Chaque montre est testée en enregistrant les bruits "tic-tac" du mouvement de la montre par des microphones externes à la boîte. EP 3 511 781 concerne un dispositif de test pour montres comportant: - une pluralité d'écrins de rangement dont chacun est apte à héberger une montre lorsqu'elle n'est pas portée, - une unité d'analyse centrale distante apte à affecter une première identification unique à chaque écrin et/ou à la montre hébergée dans chaque écrin, et - une pluralité de dispositifs d'accès et d'affichage, chaque écrin comportant au moins un moyen de mesure (ex. microphone) apte à capter des données relatives à la marche de la montre hébergée dans l'écrin et une unité de transfert apte à communiquer les données à ladite unité d'analyse centrale distante.

### RESUMÉ DE L'INVENTION

La présente invention vise à fournir une solution pour les problèmes identifiés ci-dessus. Ce but est atteint par une boîte de mesure, un système de mesure, et par une méthode selon les revendications 1, 11 et 12.

Des modes de réalisation préférés sont définis dans les revendications dépendantes 2 à 10, 13, 14.

D'autres caractéristiques et avantages de la présente invention apparaîtront dans la description suivante de modes de réalisation préférés, présentés à titre d'exemple non limitatif en référence aux dessins annexés.

### BRÈVE DESCRIPTION DES FIGURES

L'invention sera décrite ci-après de manière plus détaillée à l'aide des dessins annexés, donnés à titre d'exemples nullement limitatifs, dans lesquels :
- la figure 1 représente une vue en éclaté d'une boîte pour mesurer plusieurs mouvements de montres mécaniques, selon une forme d'exécution de l'invention,
- la figure 2 représente une vue en coupe de la boîte de la figure 1, en l'état assemblé,
- la figure 3 représente une vue d'un PCB utilisable dans la boîte selon une forme d'exécution préférée,
- la figure 4 représente un schéma de la séquence de mesures effectuée selon la méthode de l'invention,
- la figure 5 représente une vue du signal mesuré par l'un des microphones installés dans une boîte selon l'invention, et
- la figure 6 représente un schéma des composants montés sur le PCB de la boîte, selon une forme d'exécution de l'invention.

### DESCRIPTION DETAILLEE DE L'INVENTION

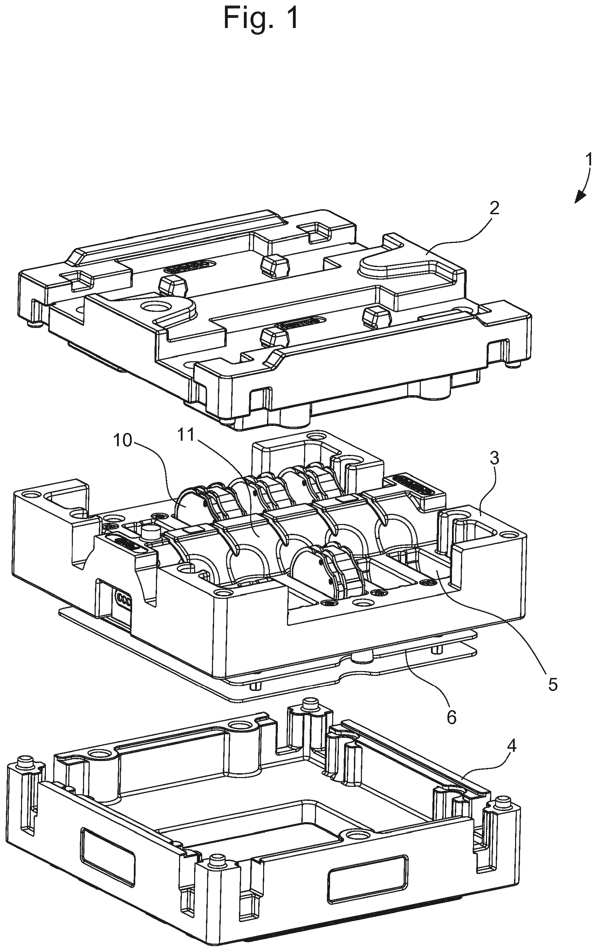

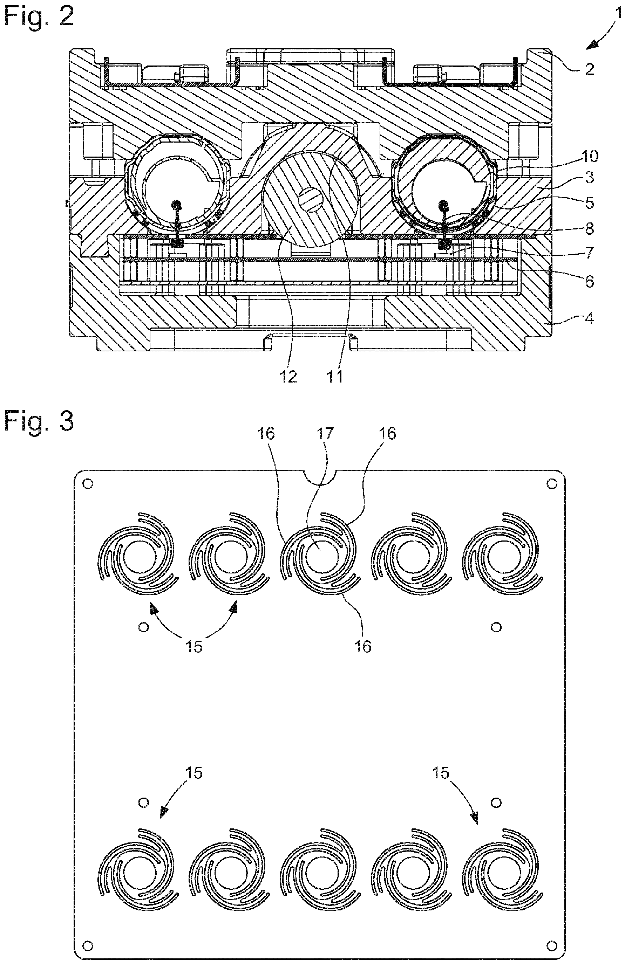

La boîte 1 représentée à la figure 1 comprend une partie centrale 3, un couvercle supérieur 2 et un couvercle inférieur 4. La partie centrale 3 comprend plusieurs compartiments 5, par exemple 10 compartiments configurés pour recevoir des mouvements de montre 10 respectifs. Dans la forme d'exécution représentée, les mouvements sont montés dans des calottes en plastique qui sont bien connues en soi comme un moyen de protection et de manipulation des mouvements. La calotte entoure le mouvement, laissant libre la couronne du mouvement. De préférence, les compartiments 5 sont dimensionnés pour recevoir des mouvements avec calotte ou des têtes de montre (boîte de montre avec mouvement mais sans bracelet). Les mouvements 10 sont logés dans les compartiments selon une orientation prédéfinie, avec la couronne 8 des mouvements orientée vers le bas. Ceci est visualisé sur la figure 2 qui représente une vue en coupe verticale de la boîte 1 assemblée.

La partie centrale 3 de la boîte 1 comprend en outre un PCB 6 (plaque à circuit imprimé, dont la plaque est en matériau synthétique), montée en dessous des compartiments 5. Le PCB 6 est muni de microphones 7, où un microphone 7 est disposé en dessous de chaque compartiment 5. Les microphones 7 sont reliés à des lignes conductrices (non représentées) du PCB, de manière à transmettre des signaux électriques qui sont représentatifs pour les bruits acoustiques captés par les microphones 7. Chaque microphone 7 est positionné en fonction de son compartiment 5, de sorte que la couronne 8 du mouvement 10 logé dans le compartiment 5 se trouve face à son microphone 7 dédié.

Les microphones 7 sont configurés pour enregistrer les bruits générés par l'oscillateur mécanique des mouvements 10 respectifs. De manière connue en soi, ces bruits consistent d'une séquence alternante de deux types d'impulsions de caractère différent, souvent nommé 'tic' et 'tac'. L'analyse des impulsions permet la mesure de paramètres caractérisant le fonctionnement du mouvement, tels que l'état de marche et le repère.

De préférence, les microphones 7 sont des microphones de contact, comprenant un élément piézoélectrique. L'enregistrement correct des impulsions 'tic' et 'tac' requiert alors que les couronnes 8 des mouvements soient montées en contact physique avec les éléments piézoélectriques des microphones 7 ou avec une pièce de contact sur laquelle l'élément piézoélectrique est fixé.

La partie centrale 3 de la boîte 1 comprend en outre un compartiment central 11 configuré pour recevoir une batterie 12, de préférence une batterie rechargeable qui sert de source d'alimentation pour les composants montés sur le PCB. Au lieu d'une batterie, une alimentation classique connectable au réseau est possible.

Selon l'invention, la boîte 1 est configurée telle que les mesures acoustiques enregistrées par l'un des microphones 7 ne sont essentiellement pas perturbées par les impulsions (tics et tacs) des mouvements autres que le mouvement logé dans le compartiment en face du microphone en question. A ce but, les microphones 7 sont pourvus de moyens d'amortissement du bruit mesuré, pour éviter que ce bruit puisse se propager à l'intérieur de la boîte 1. Selon une forme d'exécution préférée, les microphones sont des microphones de contact, comprenant un élément piézoélectrique et une structure d'amortissement en forme de spirale agencée dans le matériau du PCB, l'élément piézoélectrique étant fixé à la structure en forme de spirale. La figure 3 représente un PCB de ce type, sans les éléments piézoélectriques et sans les autres composants et lignes conductrices à produire ultérieurement sur le PCB. Les structures 15 en forme de spirales sont obtenues par découpage de 3 sections courbées 16 dans le matériau PCB autour d'un trou central 17. De préférence, le diamètre des trous 17 correspond au diamètre des éléments piézoélectriques, qui seront montés de manière fixe dans les trous 17 et connectés aux lignes conductrices du PCB. Le spiral 15 réalise l'amortissement du son par le découplage de l'élément piézoélectrique de la surface uniforme du PCB 6 (cette surface uniforme étant la surface en dehors des structures en forme de spirale 15). L'avantage de ce type de microphone est qu'il est réalisable à faible coût, tout en réalisant les mesures de plusieurs mouvements l'un indépendamment de l'autre. D'autres structures d'amortissement sont possibles. De manière générale, la structure d'amortissement établit un lien mécanique amortissant entre l'élément piézoélectrique et une portion uniforme de la plaque ou carte. Par exemple, une autre structure utilisable serait une membrane montée entre l'élément piézoélectrique et le bord d'un trou dans le PCB à diamètre plus grand que le diamètre de l'élément piézoélectrique.

La boîte 1 est également configurée pour isoler les microphones 7 des bruits qui viennent de l'extérieur de la boîte 1 quand la boîte est installée dans un environnement de test. L'isolation des microphones 7 par rapport aux bruits de l'extérieur de la boîte est réalisée par une construction adéquate de la boîte elle-même, et en particulier par un choix judicieux du matériau utilisé pour la boîte 1. La construction représentée aux figures, consistant de deux couvercles épais 2 et 4, montés des deux côtés de la partie centrale 3 qui contient les mouvements, et selon laquelle les parties 2, 3, 4 sont fabriquées en un matériau isolant au niveau acoustique, tel qu'une mousse EPP (Expanded Polypropylene) est apte à réaliser l'isolation par rapport aux bruits extérieurs.

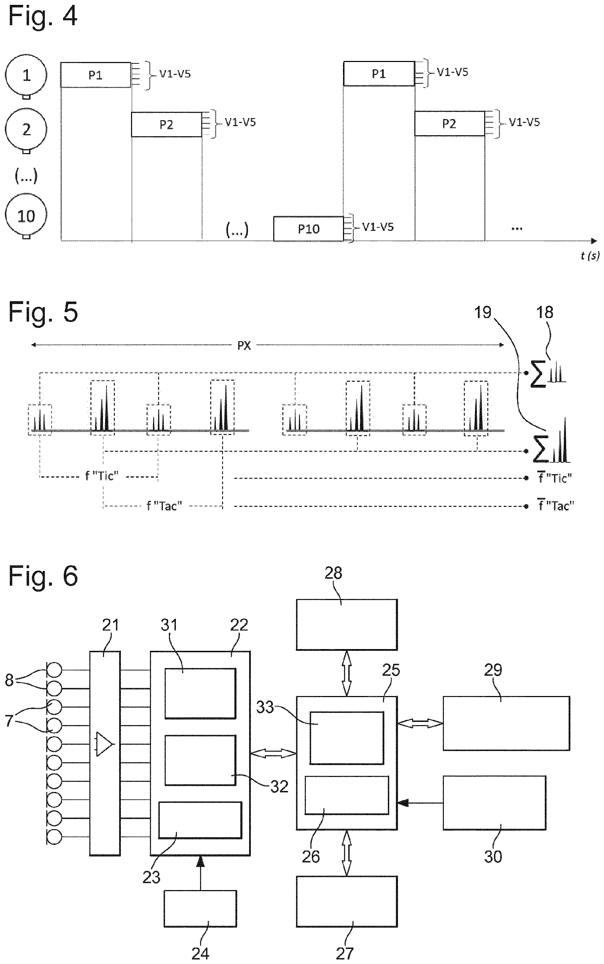

L'invention se rapporte également à une méthode pour tester les mouvements 10 installés dans la boîte 1 sur la base des signaux générés par les microphones 7. La méthode réalise l'enregistrement à intervalles réguliers des valeurs d'un nombre de paramètres caractérisant le fonctionnement des mouvements 10, pendant une partie ou la totalité de la durée de réserve de marche des mouvements, qui peut être d'environ 72h. La méthode est illustrée par un schéma à la figure 4, qui représente le cas selon lequel la boîte 1 contient par exemple dix mouvements 10 à tester. Selon une variante du procédé, une séquence de périodes consécutives d'acquisition et de traitement des signaux peut être effectuée, les périodes correspondantes à une séquence consécutive de mouvements installés dans la boîte. En d'autres mots, pendant la première période P1, les signaux générés par le premier microphone (qui mesure le premier mouvement) sont acquis. Pendant la deuxième période P2, les signaux générés par le deuxième microphone sont acquis, et ainsi de suite, jusqu'au 10^{ème} microphone. Les périodes P1 à P10 s'enchaînent de manière continue et chaque période a la même durée, par exemple dix ou quelques dizaines de secondes. A la fin de la séquence des 10 mouvements, la séquence recommence à nouveau à partir du premier mouvement. Ce cycle se répète de manière continue, pendant un certain temps, au maximum jusqu'à la fin de la durée de réserve de marche des mouvements.

Il est encore à noter que la mesure séquentielle d'un mouvement à la suite d'un autre mouvement est une version minimisant la diaphonie et la consommation. Cependant, selon la qualité des matériaux de la boîte, l'environnement extérieur, et la robustesse de la mesure et de l'algorithme, il est tout-à-fait concevable d'avoir une acquisition simultanée de deux mouvements ou plus pendant une période de mesure. Par exemple, pour deux mouvements qui sont disposés à l'opposé l'un de l'autre, ou encore pour un mouvement sur deux durant un premier intervalle de période de mesure et les autres mouvements 50% durant un second intervalle de période de mesure, on effectue les différentes mesures. Il est encore possible d'effectuer une mesure glissante entre chaque mouvement. Dans ce cas de figure, l'acquisition du premier mouvement démarre seule, puis après un certain temps, on continue à mesurer le premier mouvement, mais on commence à mesurer le mouvement suivant, puis on arrête la mesure du premier mouvement une fois le temps de mesure échu, et la mesure se poursuit qu'avec le deuxième, puis on démarre la mesure du troisième ainsi de suite.

La figure 5 représente une illustration schématique du signal mesuré par un des microphones 7 lors d'une des périodes PX. Les impulsions 'tic' et 'tac' sont représentées. De manière connue en soi, chaque impulsion consiste d'une séquence de pics liés à des phénomènes qui caractérisent l'échappement à l'intérieur du mouvement. Comme il est également bien connu de l'état de la technique, l'analyse des impulsions permet de calculer la valeur d'un nombre de paramètres numériques qui caractérisent le fonctionnement du mouvement, tels que la fréquence des 'tic' et des 'tac', l'état de marche (avance ou retard du mouvement par rapport à une oscillation de référence), le repère (décalage entre les fréquences tic et tac), l'amplitude des mouvements (l'angle entre la position d'équilibre et le point de retour du balancier) et le type d'échappement (échappement à ancre Suisse ou échappement coaxial). Selon la méthode de l'invention, les valeurs d'un ou plusieurs de ces paramètres sont enregistrées à la fin des périodes PX, pour chacun des mouvements 10 installés dans la boîte. Selon la forme d'exécution illustrée à la figure 4, cinq valeurs V1 à V5 sont enregistrées de cette manière, par exemple les valeurs des cinq paramètres identifiés ci-dessus (fréquence, état de marche, etc). Les valeurs peuvent être identifiées de manière instantanée à la fin de la période PX. Pour certains paramètres il est également possible de calculer les valeurs sur la base des signaux capturés lors de la période entière. Par exemple et comme illustré à la figure 5, les fréquences peuvent être calculées comme des moyennes *f̅_{tic}* et *f̅_{tac}* des fréquences instantanées ftic et ftac déterminées sur base du temps entre deux impulsions du même type (tic ou tac).

Une forme d'exécution spécifique de la méthode, illustrée également à la figure 5, inclut le calcul de la valeur de l'amplitude des mouvements, sur base de la somme 18 des impulsions 'tic' et la somme 19 des impulsions 'tac' capturées par le microphone 7 lors de la durée complète de la période PX. Il a été constaté que la somme des impulsions permet de mieux identifier les pics individuels faisant partie de chacune des impulsions, et ainsi d'améliorer la précision du calcul de l'amplitude du mouvement.

Selon des formes d'exécution préférées, la boîte 1 est munie de moyens de traitement des signaux et de moyens d'enregistrement des valeurs de paramètres selon les schémas illustrés aux figures 4 et 5, ainsi que de moyens de communication des résultats vers l'extérieur de la boîte 1, tel qu'un écran. La boîte peut également être pourvue d'un nombre de capteurs pour mesurer les conditions à l'intérieur de la boîte, tel que la température, l'humidité, les accélérations et le champ magnétique. Au moins certains capteurs sont montés sur la plaque à circuit imprimé et font partie du PCB.

La figure 6 représente un exemple d'un schéma du PCB applicable dans une boîte 1 selon une forme d'exécution préférée. Les couronnes 8 et les microphones 7 sont représentés. Les signaux générés par les microphones 7 passent par un étage d'amplification 21 vers une première unité de traitement 22 qui comporte un convertisseur analogique-digital (ADC) 31, un microprocesseur 32 cadencé par un oscillateur précis 24 (de préférence du type TCXO - Temperature Compensated Crystal Oscillator) relié en entrée à chaque microphone pour recevoir les signaux de chaque mouvement mécanique à tester, et une mémoire 23. L'oscillateur 24 fournit la fréquence de référence par rapport à laquelle la marche des mouvements est déterminée. La méthode de l'invention est implémentée dans l'unité de traitement 22. En d'autres mots, le processeur 32 de l'unité de traitement 22 est programmé pour acquérir les signaux des mouvements de manière consécutive, pour calculer les valeurs à la fin de chaque période de mesure PX, pour l'ensemble des mouvements installés dans la boîte, et pour enregistrer ces valeurs dans la mémoire 23. La première unité de traitement 22 est reliée à une deuxième unité de traitement 25 comprenant une mémoire 26 et un microprocesseur 33. La deuxième unité 25 est reliée à un nombre d'autres composants montés sur le PCB : une unité de gestion d'énergie 30 reliée à la batterie, une unité à capteurs 27 qui reçoit les données mesurées par d'autres capteurs (température, humidité ou autres) à l'intérieur de la boîte 1, une interface utilisateur 28 (de préférence un écran), une unité de communication 29 pour gérer la communication des valeurs mesurées vers des dispositifs à l'extérieur de la boîte tels qu'un serveur relié à la boîte via un réseau digital sans fil. Selon une forme d'exécution alternative, une seule unité de traitement est prévue, qui regroupe l'ADC, une mémoire et un seul microprocesseur qui implémente la méthode de l'invention, l'unité unique de traitement étant également reliée aux autres composants du PCB.

Selon une forme d'exécution préférée, certains composants opèrent en mode non-continu, étant réveillés à intervalles, aux instants d'envoi de données vers l'extérieur de la boîte 1. Ce mode d'opération assure une consommation d'énergie minimale.

Il peut être envisagé que la boîte 1 elle-même peut ne pas comprendre de moyens pour traiter les signaux des microphones. Elle est alors configurée pour faire partie d'un système de test comprenant la boîte 1 et un ordinateur relié à la boîte. La méthode de l'invention est alors implémentée dans l'ordinateur sous la forme d'un ensemble de composants électriques et/ou microélectroniques qui traitent les signaux générés par les microphones 7 de manière à obtenir et enregistrer les valeurs à la fin de chaque période de mesure PX.

## Revendications

1. Boîte (1) pour tester une pluralité de mouvements d'horlogerie mécaniques (10), chaque mouvement étant pourvu d'une couronne de remontage (8), la boîte comprenant :
- plusieurs compartiments (5), chaque compartiment étant configuré pour recevoir un mouvement (10), de sorte que le mouvement est logé dans le compartiment selon une orientation prédéfinie, **caractérisée en ce que** la boîte comprend:
- une pluralité de microphones (7) en nombre égal au nombre de compartiments (5), les microphones étant montés de sorte que les couronnes (8) des mouvements (10) se trouvent face aux microphones (7) respectifs quand les mouvements sont logés dans les compartiments (5) selon ladite orientation prédéfinie,
et encore **caractérisée en ce que** chaque microphone (7) est pourvu d'une structure d'amortissement, de sorte que les mesures acoustiques de chacun des mouvements (10) ne sont essentiellement pas perturbées par les bruits produits par les mouvements adjacents.

2. Boîte (1) selon la revendication 1, comprenant un PCB (6) monté en dessous des compartiments (5) et comportant une plaque en matériau synthétique, et dans laquelle les microphones (7) sont montés sur ou intégrés dans la plaque du PCB (6).

3. Boîte (1) selon la revendication 2, dans laquelle :
- les microphones (7) sont des microphones de contact, comprenant un élément piézoélectrique,
- les couronnes (8) des mouvements (10) sont mises en contact physique avec les éléments piézoélectriques des microphones (7) quand les mouvements (10) sont logés dans les compartiments (5) selon ladite orientation prédéfinie,
- la structure d'amortissement établit un lien mécanique amortissant entre l'élément piézoélectrique et une portion uniforme de la plaque du PCB (6).

4. Boîte (1) selon la revendication 3, dans laquelle la structure d'amortissement est une structure en forme de spirale (15) agencée dans le matériau synthétique de la plaque du PCB (6).

5. Boîte (1) selon la revendication 4, dans laquelle la plaque du PCB est pourvue de trous (17), les éléments piézoélectriques étant fixés dans les trous, et dans laquelle les structures en forme de spirale (15) s'étendent autour desdits trous (17).

6. Boîte (1) selon l'une quelconque des revendications 3 à 5, dans laquelle le PCB (6) comprend en outre une ou plusieurs unités de traitement (22, 25) des signaux générés par les microphones (7).

7. Boîte (1) selon la revendication 3, dans laquelle la structure d'amortissement est une membrane montée entre l'élément piézoélectrique et le bord d'un trou dans le PCB à diamètre plus grand que le diamètre de l'élément piézoélectrique.

8. Boîte (1) selon l'une quelconque des revendications précédentes, comprenant en outre un ou plusieurs capteurs pour mesurer les conditions à l'intérieur de la boîte.

9. Boîte (1) selon l'une quelconque des revendications précédentes, la boîte comportant trois parties : une partie centrale (3) comprenant les compartiments (5), un couvercle supérieur (2) et un couvercle inférieur (4).

10. Boîte (1) selon la revendication 9, dans laquelle les trois parties (2, 3, 4) sont fabriquées à partir d'un matériau isolant au niveau acoustique.

11. Système pour tester une pluralité de mouvements d'horlogerie mécaniques (10), chaque mouvement étant pourvu de sa couronne de remontage (8), le système comprenant une boîte (1) selon l'une quelconque des revendications précédentes.

12. Méthode pour tester une pluralité de mouvements d'horlogerie mécaniques (10) installés en état remonté dans une boîte (1) selon l'une quelconque des revendications 1 à 9, la méthode :
- comprenant l'acquisition des signaux générés par les microphones (7) configurés pour mesurer le bruit des impulsions 'tic' et 'tac' générées par les mouvements (10), l'acquisition étant effectuée de manière consécutive pour la pluralité de mouvements, par un cycle de périodes de mesure consécutives (P1-P10), enchaînées et de longueur égale, le cycle étant répété une ou plusieurs fois,
- étant configurée de sorte qu'au moins une valeur d'un paramètre caractérisant le fonctionnement du mouvement testé est enregistrée à la fin de chaque période de mesure.

13. Méthode selon la revendication 12, selon laquelle les valeurs enregistrées comprennent une ou plusieurs des valeurs suivantes :
- la fréquence des impulsions 'tic' et la fréquence des impulsions 'tac',
- l'état de marche,
- le repère,
- l'amplitude du mouvement,
- le type de mouvement.

14. Méthode selon la revendication 13 comprenant l'enregistrement de l'amplitude des mouvements, et selon laquelle le calcul de l'amplitude est basé sur la somme des signaux liés aux impulsions 'tic' et sur la somme des signaux liés aux impulsions 'tac', lors d'une période de mesure (P1-P10).

## Patentansprüche

1. Dose (1) zum Testen einer Vielzahl von mechanischen Uhrwerken für die Uhrmacherei (10), wobei jedes Uhrwerk mit einer Krone zum Aufziehen (8) versehen ist, wobei die Dose umfasst:
- mehrere Fächer (5), wobei jedes Fach ausgestaltet ist, ein Uhrwerk (10) aufzunehmen, sodass das Uhrwerk in dem Fach gemäß einer vordefinierten Ausrichtung untergebracht ist, **dadurch gekennzeichnet, dass** die Dose umfasst:
- eine Vielzahl von Mikrophonen (7) in gleicher Anzahl wie die Anzahl der Fächer (5), wobei die Mikrophone so montiert sind, dass sich die Kronen (8) der Uhrwerke (10) gegenüber den jeweiligen Mikrophonen (7) befinden, wenn die Uhrwerke in den Fächern (5) gemäß der vordefinierten Ausrichtung untergebracht sind,
und noch **dadurch gekennzeichnet, dass** jedes Mikrophon (7) mit einer Dämpfungsstruktur versehen ist, sodass die akustischen Messungen jedes der Uhrwerke (10) im Wesentlichen nicht durch die von den benachbarten Uhrwerken erzeugten Geräusche gestört werden.

2. Dose (1) nach Anspruch 1, umfassend eine gedruckte Schaltung (6), die unter den Fächern (5) montiert ist und eine Platte aus synthetischem Werkstoff umfasst, und wobei die Mikrophone (7) auf der Platte der gedruckten Schaltung (6) montiert oder in dieser integriert sind.

3. Dose (1) nach Anspruch 2, wobei:
- die Mikrophone (7) Kontaktmikrophone sind, die ein piezoelektrisches Element umfassen,
- die Kronen (8) der Uhrwerke (10) in physischen Kontakt mit den piezoelektrischen Elementen der Mikrophone (7) gebracht werden, wenn die Uhrwerke (10) in den Fächern (5) gemäß der vordefinierten Ausrichtung untergebracht sind,
- die Dämpfungsstruktur eine dämpfende mechanische Verbindung zwischen dem piezoelektrischen Element und einem gleichförmigen Abschnitt der Platte der gedruckten Schaltung (6) herstellt.

4. Dose (1) nach Anspruch 3, wobei die Dämpfungsstruktur eine spiralförmige Struktur (15) ist, die in dem synthetischen Werkstoff der Platte der gedruckten Schaltung (6) angeordnet ist.

5. Dose (1) nach Anspruch 4, wobei die Platte der gedruckten Schaltung mit Löchern (17) versehen ist, wobei die piezoelektrischen Elemente in den Löchern fixiert sind und wobei sich die spiralförmigen Strukturen (15) um die Löcher (17) herum erstrecken.

6. Dose (1) nach einem der Ansprüche 3 bis 5, wobei die gedruckte Schaltung (6) weiter eine oder mehrere Verarbeitungseinheiten (22, 25) für Signale umfasst, die von den Mikrophonen (7) generiert werden.

7. Dose (1) nach Anspruch 3, wobei die Dämpfungsstruktur eine Membran ist, die zwischen dem piezoelektrischen Element und dem Rand eines Lochs in der gedruckten Schaltung mit größerem Durchmesser als der Durchmesser des piezoelektrischen Elements montiert ist.

8. Dose (1) nach einem der vorstehenden Ansprüche, weiter umfassend einen oder mehrere Messwertaufnehmer, um die Bedingungen innerhalb der Dose zu messen.

9. Dose (1) nach einem der vorstehenden Ansprüche, wobei die Dose drei Teile umfasst: einen Mittelteil (3), der die Fächer (5) umfasst, einen oberen Deckel (2) und einen unteren Deckel (4).

10. Dose (1) nach Anspruch 9, wobei die drei Teile (2, 3, 4) ausgehend von einem akustisch isolierenden Werkstoff gefertigt sind.

11. System zum Testen einer Vielzahl von mechanischen Uhrwerken für die Uhrmacherei (10), wobei jedes Uhrwerk mit seiner Krone zum Aufziehen (8) versehen ist, wobei das System eine Dose (1) nach einem der vorstehenden Ansprüche umfasst.

12. Verfahren zum Testen einer Vielzahl von mechanischen Uhrwerken für die Uhrmacherei (10), die in aufgezogenem Zustand in einer Dose (1) nach einem der Ansprüche 1 bis 9 installiert sind, wobei das Verfahren:
- das Erfassen von Signalen umfasst, die von den Mikrophonen (7) generiert werden, die ausgestaltet sind, das Geräusch der "Tick"- und "Tack"-Schaltungen zu messen, die von den Uhrwerken (10) generiert werden, wobei das Erfassen in aufeinanderfolgender Weise für die Vielzahl von Uhrwerken erfolgt, durch einen Zyklus von aufeinanderfolgenden Messperioden (P1-P10), aneinandergereiht und mit gleicher Länge, wobei der Zyklus ein oder mehrere Male wiederholt wird,
- so ausgestalte ist, dass wenigstens ein Wert eines Parameters, der das Funktionieren des getesteten Uhrwerks kennzeichnet, am Ende jeder Messperiode gespeichert wird.

13. Verfahren nach Anspruch 12, wobei die gespeicherten Werte einen oder mehrere der folgenden Werte umfassen:
- die Frequenz der "Tick"-Schaltungen und die Frequenz der "Tack"-Schaltungen,
- der Betriebszustand,
- das Merkzeichen,
- die Schwingungsweite des Uhrwerks,
- der Uhrwerktypus.

14. Verfahren nach Anspruch 13, umfassend das Speichern der Schwingungsweite der Uhrwerke und wobei die Berechnung der Schwingungsweite auf der Summe der Signale in Verbindung mit den "Tick"-Schaltungen und auf der Summe der Signale in Verbindung mit den "Tack"-Schaltungen während einer Messperiode (P1-P10) basiert.

## Claims

1. Case (1) for testing a plurality of mechanical horological movements (10), each movement being provided with a winding button (8), the case comprising:
- a plurality of compartments (5), each compartment being configured so as to receive a movement (10), such that the movement is housed inside the compartment according to a predefined orientation, **characterised in that** the case comprises :
- a plurality of microphones (7) equal in number to the number of compartments (5), the microphones being mounted such that the winding buttons (8) of the movements (10) are located facing the respective microphones (7) when the movements are housed inside the compartments (5) according to said predefined orientation, and
**characterised in that** each microphone (7) is provided with a noise-cancelling structure, such that the acoustic measurements of each of the movements (10) are essentially not disturbed by the noises produced by the adjacent movements.

2. Case (1) according to claim 1, comprising a PCB (6) mounted beneath the compartments (5) and including a board made of synthetic material, and wherein the microphones (7) are mounted on or integrated into the board of the PCB (6).

3. Case (1) according to claim 2, wherein:
- the microphones (7) are contact microphones comprising a piezoelectric element,
- the winding buttons (8) of the movements (10) are placed in physical contact with the piezoelectric elements of the microphones (7) when the movements (10) are housed inside the compartments (5) according to said predefined orientation,
- the noise-cancelling structure establishes a mechanical noise-cancelling link between the piezoelectric element and a uniform portion of the board of the PCB (6).

4. Case (1) according to claim 3, wherein the noise-cancelling structure is a spiral-shaped structure (15) arranged in the synthetic material of the board of the PCB (6).

5. Case (1) according to claim 4, wherein the board of the PCB is provided with holes (17), the piezoelectric elements being fastened inside the holes, and wherein the spiral-shaped structures (15) extend around said holes (17).

6. Case (1) according to any of claims 3 to 5, wherein the PCB (6) further comprises one or more units (22, 25) for processing the signals generated by the microphones (7).

7. Case (1) according to claim 3, wherein the noise-cancelling structure is a membrane mounted between the piezoelectric element and the edge of a hole in the PCB, the diameter whereof is greater than the diameter of the piezoelectric element.

8. Case (1) according to any one of the preceding claims, further comprising one or more sensors for measuring the conditions inside the case.

9. Case (1) according to any one of the preceding claims, the case including three parts: a central part (3) comprising the compartments (5), a top cover (2) and a bottom cover (4).

10. Case (1) according to claim 9, wherein the three parts (2, 3, 4) are made of an acoustically insulating material.

11. System for testing a plurality of mechanical horological movements (10), each movement being provided with the winding button (8) thereof, the system comprising a case (1) according to any one of the preceding claims.

12. Method for testing a plurality of mechanical horological movements (10) installed in the wound state inside a case (1) according to any one of claims 1 to 9, the method:
- comprising the acquisition of the signals generated by the microphones (7) configured so as to measure the noise of the 'tick' and 'tock' impulses generated by the movements (10), the acquisition being carried out consecutively for the plurality of movements, by a cycle of consecutive measurement periods (P1-P10), following on from one another and equal in length, the cycle being repeated once or several times,
- being configured such that at least one value of a parameter characterising the operation of the movement tested is recorded at the end of each measurement period.

13. Method according to claim 12, wherein the values recorded comprise one or more of the following values:
- the frequency of the 'tick' impulses and the frequency of the 'tock' impulses,
- the running state,
- the beat,
- the amplitude of the movement,
- the type of movement.

14. Method according to claim 13 comprising the recording of the amplitude of the movements, and wherein the calculation of the amplitude is based on the sum of the signals linked to the 'tick' impulses and on the sum of the signals linked to the 'tock' impulses, during a measurement period (P1-P10).
